# EUROPÄISCHE PATENTSCHRIFT

(11) **EP 3 311 008 B1**
(45) Veröffentlichungstag und Bekanntmachung des Hinweises auf die Patenterteilung: **03.07.2019**
(21) Anmeldenummer: 16728626.9
(22) Anmeldetag: 20.05.2016
(51) Int. Cl.: F01L 3/08, F01L 3/02

(54) **VENTILFÜHRUNG**
VALVE GUIDE
GUIDE DE SOUPAPE

(30) Priorität: 16.06.2015 DE 102015109621
(43) Veröffentlichungstag der Anmeldung: 25.04.2018
(73) Patentinhaber: Bleistahl-Produktions GmbH & Co KG, 58300 Wetter (DE)
(72) Erfinder: HÜNSCHE, Ingwar, 58300 Wetter (DE); BLECKING, Christian, 58332 Schwelm (DE); KÖHLER, Ekkehard, 58300 Wetter (DE)
(74) Vertreter: Schneiders & Behrendt PartmbB Rechtsanwälte - Patentanwälte
(86) Internationale Anmeldenummer: PCT/EP2016/061405
(87) Internationale Veröffentlichungsnummer: WO 2016/202525

(56) Entgegenhaltungen:
- DE-A1- 10 343 680
- JP-A- H0 267 406
- JP-A- H0 828 222
- JP-A- H0 953 422
- JP-A- S6 477 708
- JP-A- 2003 035 112

## Beschreibung

Die Erfindung betrifft eine pulvermetallurgisch hergestellte Ventilführung für Verbrennungsmotoren mit einem Mittelteil, einem nockenseitigen und einem kanalseitigen Endstück.

Ventilführungen für Verbrennungsmotoren befinden sich im Zylinderkopf und haben die Aufgabe, das oszillierende Ventil so zu führen, dass es an dem Ventilsitzring dicht anliegen und dadurch den Gaskanal verschließen kann.

Bereits seit vielen Jahrzehnten werden Ventilführungen pulvermetallurgisch hergestellt. Unter anderem stellt die herstellungsbedingte Porosität einen besonderen Vorteil dar, da die Poren sich mit Öl füllen und die Schmierwirkung zwischen Ventilführung und Ventilschaft verbessert wird. Eine gute Schmierung ist zwischen diesen Komponenten notwendig, da durch die oszillierende Bewegung Reibung entsteht.

Grundsätzlich kann man eine in einem Verbrennungsmotor eingebaute Ventilführung in einen Mittelteil, ein nockenseitiges und ein kanalseitiges Endstück unterteilen. Jeder dieser Abschnitte ist anderen Umgebungsbedingungen ausgesetzt und hat andere Funktionen zu erfüllen.

So ist das kanalseitige Endstück (insbesondere bei Auslassventilen) hohen Temperaturen ausgesetzt und muss daher temperaturbeständig sowie korrosions- und verschleißfest sein. Des Weiteren muss es über eine gute Wärmeleitfähigkeit zur Wärmeableitung verfügen.

Der Mittelteil, der im Wesentlichen den mittleren Bereich der Ventilführung umfasst, hat zum einen die Aufgabe, die Wärme aus dem kanalseitigen Endstück in Richtung Zylinderkopf (der gekühlt wird) zu leiten. Zum anderen muss er aber auch eine gute Schmierung zwischen Führung und Schaft gewährleisten. Außerdem soll der Mittelteil eine gute Bearbeitbarkeit ermöglichen, damit nach der notwendigen Endbearbeitung durch den Motorenbauer im Zylinderkopf eine hohe Maßhaltigkeit für die Fluchtung der Ventile gewährleistet ist.

Das nockenseitige Endstück, das aus dem Zylinderkopf hinausragt, sollte ebenfalls verschleißfest sein, obwohl sich die Verschleißmechanismen Abrasion und Adhäsion aufgrund der niedrigeren Umgebungstemperatur nicht so stark auswirken wie beim kanalseitigen Endstück. Idealerweise wird der nockenseitige Austritt von Öl und Gas aus dem Zylinderkopf vermieden.

Ventilführungen, die aus einem Material hergestellt werden, können nicht alle Funktionen der drei unterschiedlichen Abschnitte gleichzeitig erfüllen. So ist beispielsweise ein Material mit hoher Porosität geeignet, Öl aufzunehmen. Andererseits ist es aufgrund der Poren besonders anfällig für Korrosion. Die Porosität kann zudem zu einer Schwächung der mechanischen Eigenschaften führen. Solch ein Material wäre geeignet für den Mittelteil, aber weniger für die Kanalseite. Durch die Poren kann weiterhin Öl austreten. Ein weiteres Beispiel ist ein besonders verschleißfestes Material, dass sich jedoch nicht gut bearbeiten lässt, was dem kanalseitigen Material entspricht.

In der Druckschrift GB 780 073 A wird eine Lösung vorgeschlagen, Oxidation und Korrosion bei pulvermetallurgisch hergestellten Ventilführungen zu vermeiden. Dies geschieht durch einen korrosionsresistenten metallischen Mantel, der durch Beschichtung auf die Ventilführung oder auf Teile derselben aufgebracht wird.

Die Druckschrift DE 103 43 680 A1 offenbart eine Lösung zur Erhöhung der Öl- und Gasdichtigkeit von Ventilführungen durch eine Kupferinfiltrierung des nockenseitigen Endes.

Die JP H 0267406A A offenbart eine Ventilführung für Verbrennungsmotoren mit einem Mittelteil, einem nockenseitigen und einem kanalseitigen Endstück, wobei der Mittelteil aus einem ersten Material und das kanalseitige Endstück aus einem zweiten Material besteht.

Die genannten Druckschriften bieten lediglich Teillösungen für die diversen Aufgaben der drei genannten Abschnitte der Ventilführung. Zudem handelt es sich nicht um der Ventilführung inhärente Eigenschaften. Vielmehr muss durch einen zusätzlichen Arbeitsschritt ein korrosionsbeständiger Mantel oder eine Kupferhülse an der Ventilführung angebracht werden, um die gewünschte Wirkung zu erzielen.

Dementsprechend liegt der Erfindung die Aufgabe zugrunde, eine pulvermetallurgisch hergestellte Ventilführung bereitzustellen, die abschnittsweise aus verschiedenen Materialien besteht, um dadurch die unterschiedlichen und besonderen Anforderungen der jeweiligen Abschnitte gleichzeitig erfüllen zu können.

Diese Aufgabe wird durch eine pulvermetallurgisch hergestellte Ventilführung der eingangs bezeichneten Art gelöst, bei der der Grundköper aus einem ersten Material und das kanalseitige Endstück aus einem zweiten Material besteht, wobei das nockenseitige und/oder das kanalseitige Endstück mit Kupfer infiltriert sind. Soweit die Sintermaterialien bereits Kupfer enthalten, kommt das infiltrierte Kupfer hinzu. Vorzugsweise sind beide Endstücke zusätzlich mit Kupfer infiltriert. Dies hat den Vorteil, dass zum einen in diesem kritischen Bereich die Wärmeleitfähigkeit erhöht wird. Zum anderen ist aber ein hoher Kupferanteil in diesen Bereichen günstig für die Gleitfähigkeit.

Unter Kupfer für die Infiltration werden neben reinem Kupfer vor allem Kupferlegierungen mit einem Kupfergehalt von mehr als 90 Gw.-% verstanden.

Zweckmäßigerweise ist das zweite Material härter als das erste Material. Dabei weist das zweite Material vorzugsweise eine Härte von mehr als 70 HRB auf, während das erste Material eine um wenigstens 10 HRB geringere Härte haben kann.

Der Vorteil der Erfindung ist, dass die einzelnen Abschnitte der Ventilführung den unterschiedlichen Anforderungen, auch an den Werkstoff, angepasst sind. Im Gegensatz dazu bleibt der Mittelteil im Wesentlichen frei von infiltriertem Kupfer. Dies kann zum einen dadurch erreicht werden, dass die drei Segmente der Ventilführung individuell hergestellt und anschließend miteinander verbunden werden, wobei die Endstücke vor dem Verbinden mit Kupfer infiltriert werden, oder aber durch eine besondere Ausrüstung oder Materialauswahl für den Mittelteil. So kann durch einen Mangangehalt die weitere Kupferaufnahme durch Infiltration gesteuert werden. Die Kupferaufnahme erfolgt durch die Kapillarwirkung der Poren. Wird die mittlere Porengröße erhöht, ist die Kapillarität vermindert und das Aufnahmevermögen für Kupfer reduziert. Eine Beeinflussung der Kupferaufnahme in den genannten Bereichen ist beispielsweise durch die Einstellung der Benetzbarkeit der Oberfläche möglich, etwa durch die jeweilige Zusammensetzung des ersten und /oder zweiten Materials oder durch die Steuerung des Oxidations- oder Reduktionsverhaltens während des Sinterprozesses durch chemische Behandlung oder Oxidation oder durch Aufbringung von Oxidbildnern. Eine beliebige Kombination dieser Maßnahmen ist möglich.

Das nockenseitige Endstück kann aus dem ersten, aus dem zweiten oder einem dritten Material bestehen. Die Verwendung des ersten oder zweiten Materials erleichtert insbesondere das Herstellverfahren. Insbesondere der Pressvorgang kann dadurch vereinfacht und verkürzt werden. Bevorzugt besteht auch das nockenseitige Endstück aus dem zweiten Material.

Bei den Materialien handelt es sich beispielsweise um Sinterstähle, die die jeweils gewünschten Eigenschaften aufweisen.

Das erste Material setzt sich beispielsweise zusammen aus
- 78 bis 95 Gew.-% Fe,
- 3 bis 20 Gew.-% Cu,
- 0,8 bis 2 Gew.-% Mn,
- 0,4 bis 0,6 Gew.-% S und
- 0,8 bis 2 Gew.-% C

Die Zusammensetzung bezieht sich auf das gesinterte Material und schließt ggf. infiltriertes Kupfer nicht ein.

Weitere Elemente/Legierungsbestandteile können in einem Anteil von zusammen bis zu 4 Gew.-% vorhanden sein.

Eine konkrete beispielhafte Zusammensetzung des ersten Materials ist:
- 84 Gew.-% Fe,
- 12 Gew.-% Cu,
- 1,5 Gew.-% Mn,
- 0,5 Gew.-% S,
- 0,9 Gew.-% C
- weitere Elemente/Legierungsbestandteile auf 100 Gew.-%,
wobei der Kupferanteil des ersten Materials kein infiltriertes Kupfer beinhaltet.

Der eingesinterte Kupferanteil gewährleistet eine gewisse Wärmeleitfähigkeit. Der Mittelteil kann somit die hohen Temperaturen der Kanalseite und des Ventils zur Nockenseite weiterleiten. Das Kupfer wird in Form von Kupfer- bzw. Kupferlegierungspulver in die Mischung vor dem Pressen eingebracht. Schwefel in Form von Metallsulfiden, etwa Mangansulfide (MnS), aber auch Kunststoffe wirken als Festschmierstoffe und verbessern die Notlaufeigenschaft des tribologischen Systems aus Führung und Schaft, für den Fall, dass zu wenig Motoröl für die Schmierung vorhanden ist. Die Zusammensetzung des ersten Materials gewährleistet eine gute mechanische Bearbeitbarkeit.

Das zweite Material setzt sich beispielsweise zusammen aus:
- 80 bis 86 Gew.-% Fe,
- 1,0 bis 10 Gew.-% Cr,
- 5 bis 16 Gew.-% Cu,
- 0,6 bis 0,8 Gew.-% Mn,
- 0,4 bis 0,6 Gew.-% S,
- 0,5 bis 2,0 Gew.-% C und
- ggf. weiteren Elementen/Legierungsbestandteilen, die bis zu 3,5 Gew.-% ausmachen können.

Die Zusammensetzung bezieht sich auf das gesinterte Material, ohne infiltriertes Kupfer.

Eine konkrete beispielhafte Zusammensetzung des zweiten Materials ist:
- 84 Gew.-% Fe,
- 1,2 Gew.-% Cr,
- 12 Gew.-% Cu,
- 0,7 Gew.-% Mn,
- 0,5 Gew.-% S,
- 0,6 Gew.-% C und
- weitere Elemente/Legierungsbestandteile auf 100 Gew.-%,
wobei der Kupferanteil des zweiten Materials kein infiltriertes Kupfer beinhaltet.

Ein Unterschied zum ersten Material ist der Chromanteil, der zu einer höheren Verschleißbeständigkeit durch Ausbildung von Chromcarbiden und zu einer Mischkristallverfestigung führt. Zudem ist das zweite Material geeignet, hohen Temperaturen wie auch hohen abrasiven Belastungen über einen langen Zeitraum standzuhalten. In der Regel weist das kanalseitige Endstück aufgrund der höheren Temperaturen stärkere Verschleißerscheinungen auf als die Nockenseite. Das zweite Material zeichnet sich daher durch eine hohe Verschleißfestigkeit aus.

Als Verschleißmechanismen bei Ventilführungen für Verbrennungsmotoren treten häufig Adhäsion und Abrasion auf. Diese wirken zwischen Ventilführung und Ventilschaft und sind kanalseitig stärker ausgeprägt als nockenseitig. Besonders problematisch sind Verschleißerscheinungen bei Auslassventilführungen. Diese führen dort zur Vergrößerung der Spaltbreite zwischen Ventilführung und Ventilschaft. Partikel können dadurch in den Gleitbereich gelangen und zum Klemmen des Ventilschafts führen. Die Folge ist das Versagen des Motors. Der Kupferanteil im zweiten Material trägt daher zusätzlich zur Verbesserung der mechanischen Eigenschaften wie Härte und Festigkeit bei. Durch die Kupferinfiltration werden die thermischen und mechanischen Eigenschaften weiter verbessert.

Das erste und das zweite Material können sich in der Härte unterscheiden, wobei die im Vergleich zum zweiten Material des kanalseitigen Endstücks geringere Härte des ersten Materials des Mittelteils eine gute Bearbeitbarkeit gewährleistet und das härtere Material des kanalseitigen Endstücks eine hohe Verschleißfestigkeit und Temperaturbeständigkeit mit sich bringt.

Eine typische Wärmeleitfähigkeit für den Mittelteil pulvermetallurgisch hergestellter Ventilführungen liegt in einem Bereich von 21 bis 48 W/(mK). Vorzugsweise haben die Endstücke eine demgegenüber erhöhte Wärmeleitfähigkeit von 40 bis 80 W/(mK).

Pulvermetallurgisch hergestellte Ventilführungen zeichnen sich gegenüber anderen (z. B. gegossenen) Ventilführungen dadurch aus, dass sie über Poren verfügen, die eine gewisse Ölmenge aufnehmen können. Ein höherer Ölgehalt führt zu verbesserten Schmiereigenschaften der Ventilführung. Dies ist im Hinblick auf die ständige Reibung zwischen Ventilführung und Ventilschaft ein wesentlicher Vorteil.

Die Dichte für pulvermetallurgisch hergestellte Ventilführungen auf Fe-Basis liegt üblicherweise bei etwa 7 g/cm³. Daraus folgt eine Porosität von etwa 10 %. Da für den Mittelteil eine hohe Porosität erforderlich ist, sollte die Porosität für das erste Material auf einen Bereich von 10 bis 20 %, bevorzugt zwischen 15 und 20 % und besonders bevorzugt zwischen 17 und 20 % liegen. Die Porosität des Mittelteils ist wichtig für die Ölaufnahmefähigkeit und hat Einfluss auf die tribologischen Eigenschaften.

Die Porengröße des Mittelteils liegt vorzugsweise im Bereich von 10 bis 400µm, bevorzugt im Bereich von 50 bis 400 µm und insbesondere bei zwischen 100 bis 350 µm. In diesem Porengrößenbereich ist die Kapillarwirkung des Porenverbundes reduziert und reicht nicht aus, bei der Kupferinfiltration, größere Mengen Kupfer in den Körper hineinzusaugen. Gleichzeitig ist die Porengröße und das Porenvolumen für die Ölaufnahme der Ventilführung günstig.

Das zweite Material hat zweckmäßiger Weise eine Porosität von 8 bis 15 % und bevorzugt von 8 bis 12 %. Die Porengröße liegt beispielsweise im Bereich von 10 bis 400 µm, bevorzugt zwischen 10 und 350 µm und insbesondere zwischen 50 und 250 µm. Hier kommt es auf die Kapillavität für die Kupferinfiltration an.

In einer Ausführungsform kann die pulvermetallurgisch hergestellte Ventilführung zusätzlich an der Nockenseite mit einer Kupferinfiltrierung versehen werden. Dies erhöht die Öl- und Gasdichtigkeit und reduziert zusätzlich den umweltschädlichen Verbrauch von Motoröl. Die Kupferinfiltrierung umfasst dabei den Bereich von den Außenflächen bis maximal zur Wandungsmitte des nockenseitigen Endstücks, bevorzugt jedoch den eins bis drei Millimeter dünnen Randschichtbereich.

Die Fertigung der erfindungsgemäßen Ventilführung kann in fünf Schritten erfolgen. In einem ersten Schritt wird das Pulver für das aus dem zweiten Material bestehende kanalseitige Endstück in eine Matrize, die koaxial zu einem Dorn angeordnet ist, gefüllt und ggf. mit Presswerkzeug vorverdichtet, in einem zweiten Schritt wird das Pulver für den aus dem ersten Material bestehenden Mittelteil in die Matrize gefüllt und ggf. mit dem Presswerkzeug vorverdichtet, in einem dritten Schritt wird das Pulver für das aus dem zweiten oder einem dritten Material bestehende nockenseitige Endstück in die Matrize gefüllt und ggf. mit dem Presswerkzeug vorverdichtet, in einem vierten Schritt wird die gesamte Ventilführung in der Matrize mit dem Presswerkzeug verdichtet, wobei die Form des Presslings insbesondere durch die Form der Matrize und des Dorns bestimmt wird, und in einem fünften Schritt wird die gesamte Ventilführung gesintert. Dabei kann die Reihenfolge der zu verdichtenden Ventilführungsabschnitte umgekehrt werden, sodass zunächst das kanalseitige Endstück, dann der Mittelteil und zuletzt das nockenseitige Endstück verdichtet wird. Es versteht sich von selbst, dass ein Arbeitsschritt entfallen kann, wenn der Mittelteil und das nockenseitige Endstück aus demselben Material bestehen. Des Weiteren ist es möglich, dass das nockenseitige Endstück aus einem dritten Material hergestellt werden kann. Die Verdichtungsschritte können in einem Schritt zusammengefasst werden, das bedeutet, dass Zwischenverdichtungen entfallen können.

Der Pulvermischung können Presshilfsmittel, beispielsweise Wachs, hinzugefügt werden, um den Zusammenhalt des Presslings zu verstärken. Durch das spätere Sintern verdampft das Wachs vollständig und ist somit nicht mehr Bestandteil der gesinterten Ventilführung.

Im Gegensatz zu Verfahren, bei denen Ventilführungen aus einem Material gefertigt werden, hat dieses Verfahren den Vorteil, dass durch das Pressen die Dichte und die Porosität des Mittelteils gut eingestellt werden kann.

In einer besonderen Ausführungsform des Verfahrens können die verdichtete Ventilführung und ein Kupferkörper miteinander gesintert werden, wobei der Kupferkörper eng an der Nockenseite und/oder Kanalseite der verdichteten Ventilführung anliegt oder darauf aufliegt und gewichtsmäßig auf die Menge an zu infiltrierendem Kupfer abgestimmt wird. Bevorzugt handelt es sich bei dem Kupferkörper um eine Platte, eine Hülse oder einen Stab. Durch die Kupferinfiltration können die Endstücke einen Gesamtkupfergehalt von bis zu 40 Gew.-% erreichen. Demgegenüber bleibt der Gesamt-Kupfergehalt des Mittelstückes unter 30 Gew.-%, vorzugsweise unter 20 Gew.-%.

Die einzelnen Elemente bzw. Abschnitte der Ventilführung können auch für sich gefertigt werden und anschließend durch Reibschweißen miteinander verbunden werden. In diesem Fall können die Endstücke individuell mit Kupfer infiltriert werden, bevor sie mit dem Mittelteil verbunden werden.

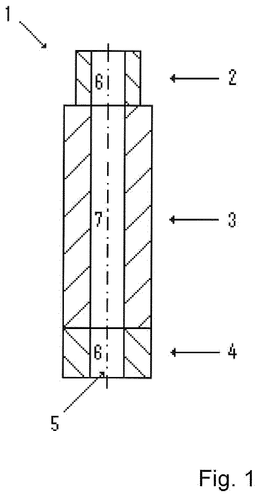

Die Abbildung zeigt eine Schnittansicht für eine beispielhafte Ausführungsform der erfindungsgemäßen Ventilführung 1. Die Ventilführung besteht aus einem nockenseitigen Endstück 2, einem Mittelteil 3 und einem kanalseitigen Endstück 4. Die Bohrung, in welcher der Ventilschaft läuft, ist mit 5 bezeichnet. In dieser Ausführungsform besteht der Mittelteil aus dem ersten Material 7 und das nockenseitige sowie kanalseitige Endstück aus dem zweiten Material 6.

Die Erfindung betrifft ferner die Verwendung von pulvermetallurgisch hergestellten Führungen mit der vorstehend beschriebenen Triple-Layer-Struktur mit einem Mitteilteil aus einem ersten Material, einem Kopfteil aus einem zweiten Material sowie einem Fußteil, wobei Kopf und/oder Fußteil mit Kupfer infiltriert sind, im Motoren- und Maschinenbau.

## Patentansprüche

1. Pulvermetallurgisch hergestellte Ventilführung für Verbrennungsmotoren mit einem Mittelteil, einem nockenseitigen und einem kanalseitigen Endstück,
**dadurch gekennzeichnet, dass** der Mittelteil aus einem ersten Material und das kanalseitige Endstück aus einem zweiten Material besteht, wobei das nockenseitige und/oder das kanalseitige Endstück mit Kupfer infiltriert sind.

2. Ventilführung nach Anspruch 1 **dadurch gekennzeichnet, dass** das nockenseitige Endstück aus dem ersten, aus dem zweiten oder einem dritten Material besteht.

3. Ventilführung nach Anspruch 1 und 2 **dadurch gekennzeichnet, dass** das erste Material aus 78 bis 95 Gew.-% Fe, 3 bis 20 Gew.-% Cu, 0,8 bis 3 Gew.-% Mn, 0,4 bis 0,6 Gew.-% S, 0,8 bis 1 Gew.-% C bis zu 4 Gew.-% weiteren Elementen besteht, wobei infiltiertes Kupfer nicht berücksichtigt ist.

4. Ventilführung nach Anspruch 1 und 2 **dadurch gekennzeichnet, dass** das zweite Material aus 80 bis 86 Gew.-% Fe, 1,1 bis 1,3 Gew.-% Cr, 12 bis 16 Gew.-% Cu, 0,6 bis 0,8 Gew.-% Mn, 0,4 bis 0,6 Gew.-% S, 0,5 bis 0,7 Gew.-% C und 0,9 bis 1,1 Gew.-% Sn besteht, wobei infiltiertes Kupfer nicht berücksichtigt ist.

5. Ventilführung nach einem der Ansprüche 1 bis 3 **dadurch gekennzeichnet, dass** das erste Material für den Mittelteil eine Wärmeleitfähigkeit von 21 bis 48 W/(mK) aufweist und/oder das zweite Material eine Wärmeleitfähigkeit von 40 bis 80 W/(mk).

6. Ventilführung nach einem der vorhergehenden Ansprüche, **dadurch gekennzeichnet, dass** das erste Material eine Porosität von 10 bis 20 % und bevorzugt von 15 bis 20% aufweist.

7. Ventilführung nach einem der vorstehenden Ansprüche, **dadurch gekennzeichnet, dass** das erste Material eine Porosität von 15 bis 20% bei einer Porengröße im Bereich von 10 bis 400µm hat, und/oder das zweite Material eine Porosität von 8 bis 15% bei einer Porengröße im Bereich von 10 bis 400µm

8. Ventilführung nach Anspruch 7, **gekennzeichnet durch** eine Porosität des ersten Materials von 17 bis 20% bei einer Porengröße im Bereich von 100 bis 350 µm.

9. Verfahren zur Herstellung einer Ventilführung nach einem der vorstehenden Ansprüche, **dadurch gekennzeichnet, dass** zunächst nacheinander die Pulver für die einzelnen Abschnitte der Ventilführung in eine Matrize, die koaxial zu einem Dorn angeordnet ist, gefüllt werden und anschließend die gesamte Ventilführung in der Matrize mit einem Presswerkzeug verdichtet wird, wobei die Form des Presslings insbesondere durch die Form der Matrize und des Dorns bestimmt wird, und in einem letzten Schritt die gesamte Ventilführung gesintert wird.

10. Verfahren nach Anspruch 9, **dadurch gekennzeichnet, dass** wenigstens einer der Füllschritte mit einer Vorverdichtung verbunden ist.

11. Verfahren zur Herstellung einer Ventilführung nach einem der Ansprüche 1 bis 8, **dadurch gekennzeichnet, dass** die einzelnen Abschnitte der Ventilführung pulvermetallurgisch durch Verdichten und Sintern gefertigt werden und durch Reibschweißen zur Ventilführung verbunden werden.

12. Verwendung von pulvermetallurgisch hergestellten Führungen mit einer Triple-Layer-Struktur mit einem Mittelteil, einem Kopf- und einem Fußteil, wobei Kopf- und/oder Fußteil mit Kupfer infiltriert sind, im Maschinen- und Motorenbau.

## Claims

1. Valve guide manufactured by powder-metallurgical processes for combustion engines, said guide comprising a central section, an end piece facing the cam, and an end piece facing the duct,
**characterized in that** the central section consists of a first material and the duct-side end piece of a second material, wherein the cam-side and/or duct-side end piece are infiltrated with copper.

2. Valve guide according to claim 1, **characterized in that** the cam-side end piece consists of the first, of the second or of a third material.

3. Valve guide according to claims 1 and 2, **characterized in that** the first material consists of 78 to 95 % w/w Fe, 3 to 20 % w/w Cu, 0.8 to 3 % w/w Mn, 0.4 to 0.6 % S, 0.8 to 1 % w/w C, and up to 4 % w/w of further elements, with infiltrated copper not being taken into account.

4. Valve guide according to claims 1 and 2, **characterized in that** the second material consists of 80 to 86 % w/w Fe, 1.1 to 1.3 % w/w Cr, 12 to 16 % w/w Cu, 0.6 to 0.8 % w/w Mn, 0.4 to 0.6 % w/w S, 0.5 to 0.7 % w/w C, and 0.9 to 1.1 % w/w Sn, with infiltrated copper not being taken into account.

5. Valve guide according to any one of claims 1 to 3, **characterized in that** the first material for the central section has a thermal conductivity ranging between 21 and 48 W/(mK) and/or the second material has a thermal conductivity of between 40 and 80 W/(mk).

6. Valve guide according to any one of the preceding claims, **characterized in that** the first material has a porosity ranging between 10 and 20 % and preferably between 15 and 20 %.

7. Valve guide according to any one of the preceding claims, **characterized in that** the first material has a porosity of 15 to 20 % at a pore size in the range of between 10 and 400 µm, and/or the second material has a porosity of 8 to 15% at a pore size in the range of between 10 and 400 µm.

8. Valve guide according to Claim 7, **characterized by** a porosity of the first material of between 17 and 20% at a pore size in the range of 100 to 350 µm.

9. Method for the manufacture of a valve guide according to any one of the preceding claims, **characterized in that** at first the powders for the individual sections of the valve guide are successively filled into a die which is arranged coaxially to a punch, and, following which, the entire valve guide in the die is compacted by means of a pressing tool, with the form of the compact being in particular determined by the form of the die and the punch, and with the entire valve guide being sintered in a final work step.

10. Method according to claim 9, **characterized in that** a precompaction step is carried out for at least one of the filling steps.

11. Method for the manufacture of a valve guide according to any one of claims 1 to 8, **characterized in that** the individual sections of the valve guide are produced in a powder metallurgical way by compaction and sintering and joined by friction welding to form the valve guide.

12. Use of powder-metallurgically manufactured guides in the mechanical and engine engineering field, said guides consisting of a triple-layer structure, with a central section, a head portion and a foot portion, with the head and/or foot portion being infiltrated with copper.

## Revendications

1. Guide de soupape fabriqué selon la métallurgie des poudres pour des moteurs à combustion interne, qui comporte une partie centrale, une partie d'extrémité côté came et une partie d'extrémité côté canal, **caractérisé en ce que** la partie centrale est constituée par un premier matériau et la partie d'extrémité côté canal est constituée par un deuxième matériau, la partie d'extrémité côté came et/ou la partie d'extrémité côté canal ayant été soumises à des infiltrations de cuivre.

2. Guide de soupape selon la revendication 1, **caractérisé en ce que** la partie d'extrémité côté came est constituée par le premier, le deuxième ou un troisième matériau.

3. Guide de soupape selon les revendications 1 et 2, **caractérisé en ce que** le premier matériau est constitué par 78 à 95 % en poids de Fe, 3 à 20 % en poids de Cu, 0,8 à 3 % en poids de Mn, 0,4 à 0,6 % en poids de S, 0,8 à 1 % en poids de C, jusqu'à 4 % en poids d'autres éléments, le cuivre infiltré n'étant pas pris en compte.

4. Guide de soupape selon les revendications 1 et 2, **caractérisé en ce que** le deuxième matériau est constitué par 80 à 86 % en poids de Fe, 1,1 à 1,3 % en poids de Cr, 12 à 16 % en poids de Cu, 0,6 à 0,8 % en poids de Mn, 0,4 à 0,6 % en poids de S, 0,5 à 0,7 % en poids de C et 0,9 à 1,1 % en poids de Sn, le cuivre infiltré n'étant pas pris en compte.

5. Guide de soupape selon l'une quelconque des revendications 1 à 3, **caractérisé en ce que** le premier matériau pour la partie centrale présente une conductivité thermique de 21 à 48 W/(mK) et/ou le deuxième matériau présente une conductivité thermique de 40 à 80 W/(mK).

6. Guide de soupape selon l'une quelconque des revendications précédentes, **caractérisé en ce que** le premier matériau présente une porosité de 10 à 20 % et de préférence de 15 à 20 %.

7. Guide de soupape selon l'une quelconque des revendications précédentes, **caractérisé en ce que** le premier matériau présente une porosité de 15 à 20 % à une taille de pores dans la plage allant de 10 à 400 µm, et/ou le deuxième matériau présente une porosité de 8 à 15 % à une taille de pores dans la plage allant de 10 à 400 µm.

8. Guide de soupape selon la revendication 7, **caractérisé par** une porosité du premier matériau de 17 à 20 % à une taille de pores dans la plage allant de 100 à 350 µm.

9. Procédé de fabrication d'un guide de soupape selon l'une quelconque des revendications précédentes, **caractérisé en ce qu'**une matrice, qui est agencée coaxialement à un mandrin, est tout d'abord remplie successivement avec les poudres pour les sections individuelles du guide de soupape, puis l'ensemble du guide de soupape est compacté dans la matrice avec un outil de compression, la forme du produit comprimé étant notamment déterminée par la forme de la matrice et du mandrin, et, lors d'une dernière étape, l'ensemble du guide de soupape est fritté.

10. Procédé selon la revendication 9, **caractérisé en ce qu'**au moins une des étapes de remplissage est associée avec un pré-compactage.

11. Procédé de fabrication d'un guide de soupape selon l'une quelconque des revendications 1 à 8, **caractérisé en ce que** les sections individuelles du guide de soupape sont fabriquées selon la métallurgie des poudres par compactage et frittage, et reliées par soudage par friction pour former le guide de soupape.

12. Utilisation de guides fabriqués selon la métallurgie des poudres, présentant une structure tricouche qui comporte une partie centrale, une partie de tête et une partie de pied, la partie de tête et/ou la partie de pied ayant été soumises à des infiltrations de cuivre, dans la construction de machines et de moteurs.
